# EUROPEAN PATENT APPLICATION

(11) **EP 4 589 452 A1**
(43) Date of publication of application: **23.07.2025**
(21) Application number: 22964035.4
(22) Date of filing: 04.11.2022
(51) Int. Cl.: G06F 17/18, G06Q 10/063

(54) **CARBON EMISSION EVALUATION MODEL, EVALUATION METHOD AND EVALUATION SYSTEM FOR LONG-PROCEDURE IRON AND STEEL ENTERPRISE**

(30) Priority: 01.11.2022 CN 202211358804
(71) Applicant: Angang Steel Company Limited, Anshan, Liaoning 114003 (CN); Northeastern University, Shenyang, Liaoning 110819 (CN)
(72) Inventor: MENG, Jinsong, Anshan, Liaoning 114021 (CN); MA, Guangyu, Anshan, Liaoning 114021 (CN); SUN, Wenqiang, Shenyang, Liaoning 110819 (CN); LI, Weidong, Anshan, Liaoning 114021 (CN); ZHANG, Hanxin, Shenyang, Liaoning 110819 (CN); HE, Song, Anshan, Liaoning 114021 (CN); LIN, Ke, Anshan, Liaoning 114021 (CN); CONG, Jingong, Anshan, Liaoning 114021 (CN); CAI, Qiuye, Anshan, Liaoning 114021 (CN); WANG, Zhongrun, Anshan, Liaoning 114021 (CN); FANG, Xiaoqing, Shenyang, Liaoning 110819 (CN); LIU, Shuhan, Shenyang, Liaoning 110819 (CN)
(74) Representative: Murgitroyd & Company
(86) International application number: PCT/CN2022/129906
(87) International publication number: WO 2024/092727

(57) **Abstract**

Provided in the present disclosure are a carbon emission evaluation model, evaluation method and evaluation system for a long-procedure iron and steel enterprise. In the present disclosure, for iron and steel enterprise characterized by a long blast furnace-converter procedure, during carbon emission evaluation, the carbon emission evaluation of levels of the iron and steel enterprise depending on the coupling relationship between a material flow, an energy flow and a carbon flow, and process units connected thereto. In view of the coupling relationship between the material flow and the energy flow and the characteristic of the carbon flow being inseparable from the material flow and the energy flow during an iron and steel production process, a material flow-energy flow-carbon flow analysis model is invented, such that when a parameter of any link changes, the determination of other production processes affected by the link is fully realized. By means of a determined chain reaction, the effect of a change in a certain parameter during the whole production process or between links can be accurately evaluated, a defect in the aspect of repeated calculation or missing calculation is overcome, and the accurate evaluation of carbon emission during the production process in which there is a chain reaction when measures are implemented in the iron and steel enterprise is realized.

## Description

### TECHNICAL FIELD

The present disclosure relates to the technical field of energy saving and carbon reduction technology for iron and steel sites, relating to a carbon emission evaluation method, in particular to a carbon emission evaluation model, evaluation method and evaluation system for integrated iron and steel sites.

### BACKGROUND ART

The rapid development in economy makes carbon emission become an important factor constraining the sustainable development of economy, society and environment. Iron and steel industry is one of the largest sources of carbon emissions. Currently, there are some carbon emission evaluation solutions at the iron and steel industry level. However, for integrated iron and steel sites, these industry level carbon emission evaluation solutions are often not specific enough and do not align with the actual production situations of iron and steel sites, which fail to reflect the carbon emission situations of individual iron and steel sites, cannot effectively help iron and steel sites implement carbon emission reduction measures, and cannot achieve the purpose of accurately evaluating the energy saving and carbon reduction effects of iron and steel sites.

Moreover, in existing carbon emission evaluation solutions, such as calculating and analyzing the carbon emissions of various components before and after carbon emission reduction measures, first identify multiple components included in an analysis object before and after adopting low-carbon strategies, separately calculate the baseline carbon emissions of the analysis object before and after the implementation of low-carbon strategies, so as to obtain the reduction difference between carbon emissions of the analysis object before and after the implementation of the low-carbon strategies. For another example of integrated iron and steel sites with high carbon emissions in a certain process, it is possible to consider carrying out process or equipment improvements in the process, and predict the structure index and process index of carbon emissions after the implementation of the process or equipment improvements.

Although these carbon emission evaluation solutions consider the influence of actual production conditions on carbon emissions and can complete carbon emission evaluations, steel production involves a wide variety of energy materials and complex processes. Changes in parameters in a process (process, energy or equipment) often leads to changes in other processes, which in turn affect carbon emissions. Existing solutions that only consider the influence of a single parameter change on carbon emissions fail to account for the precision, specificity and chain reactions of low-carbon emission measures in production processes, leading to duplicate calculations or omissions when quantifying carbon emissions. For example, in case with chain reactions, if change in process A → change in process B, change in process A → change in process C and change in process B → change in process C, then changes in processes A, B and C will all affect carbon emissions. When assessing the effect of the change in process C on carbon emissions, the effect of the change in process B → change in process C on carbon emissions includes not only the effect of the change in process B → change in process C on carbon emissions, but also the effect of the change in process A → change in process B → change in process C on carbon emissions, leading to duplicate calculations in practice. The effect of the change in process A → change of link B on carbon emissions cannot be directly calculated by multiplying process A' parameters by an emission factor, which would omit the effect of changes in process B. Such duplicate calculations or omissions make it impossible to accurately assess carbon emissions in the production process.

### SUMMARY

In view of the problems existing in the prior art, an object of the present disclosure is to provide a carbon emission evaluation model, evaluation method and evaluation system for integrated iron and steel sites, so as to overcome the shortcomings of the existing technical methods that cannot perform carbon emission assessment at iron and steel site levels, and cannot accurately evaluate the effect of changes in a certain production process on the entire production process or between processes, which may lead to duplicate calculations or omissions.

The present disclosure adopts the following technical solutions to solve the above technical problems.

In one aspect, the present disclosure provides a carbon emission evaluation model for integrated iron and steel sites, including:

A material flow-energy flow coupling analysis model composed of a coupling relationship between a material flow and an energy flow, an input and output of the coupling of material flow and energy flow, and a conversion relationship between the input and output of the coupling; and,

A material flow-energy flow-carbon flow coupling analysis model formed, based on coupling relationships between a carbon flow and the material and energy flows, by supplementing conversion relationships between the carbon flow and the material and energy flows on the basis of the material flow-energy flow coupling analysis model.

When a parameter changes, the material flow and the energy flow of a unit where the parameter resides are decoupled by using the material flow-energy flow coupling analysis model and a metallurgical mechanism underlying a production process, thereby obtaining effects on other material flows and energy flows, and determining an influence scope on an output material flow or energy flow of the unit, an intermediate material flow or energy flow product, and input and output material flows or energy flows of a downstream unit, as well as trend changes of variables.

When a parameter changes, carbon flows from the material flow and the energy flow of a unit where the parameter resides are decoupled by using the material flow-energy flow-carbon flow coupling analysis model and a metallurgical mechanism underlying a production process, thereby obtaining effects on the carbon flows coupled with the material flow and the energy flow, and determining an influence scope on an output carbon flow of the unit, an intermediate material flow or energy flow product containing carbon flow, and input and output carbon flows of a downstream unit, as well as trend changes of variables.

Among which, the material flow comprises an iron-containing material flow and a carbon-containing material flow; the energy flow comprises a fuel and an energy carrier; the conversion relationship between the input and output of the coupling of material flow and energy flow refers to inputting a material flow, energy flow or coupled material flow and energy flow into a unit and outputting it from the unit after a conversion process, and then obtaining a converted material flow, energy flow or coupled material flow and energy flow; and the conversion relationships between the carbon flow and the material and energy flows are the relationships between the material flow and its carbon content, the energy flow and its carbon content, and the coupled material flow and energy flow and its carbon content.

Further, the material flow-energy flow coupling analysis model is established by steps including:
Collecting the input and output of the material flow and the energy flow in a production process of iron and steel sites;
Determining, based on the metallurgical mechanism and the input and output of the material flow and the energy flow in the production process, the coupling relationship between the material flow and the energy flow;
Determining, based on the metallurgical mechanism and the input and output of the material flow and the energy flow in the production process, the coupling relationships between the carbon flow and the material and energy flows;
Determining, according to the coupling relationship between the material flow and the energy flow, as well as the coupling relationships between the carbon flow and the material and energy flows, unit processes connected by the material flow, the energy flow and the carbon flow, where the unit processes include a major process, an energy system, and production equipment contained within the major process and the energy system;
Determining, according to the coupling relationship between the material flow and the energy flow, as well as the unit processes, the conversion relationship between the input and output of the coupling of material flow and energy flow in the production process; and
Establishing the material flow-energy flow coupling analysis model based on the input and output of the material flow and the energy flow, the coupling relationship between the material flow and the energy flow, and the conversion relationship between the input and output of the coupling of material flow and energy flow.

The material flow-energy flow-carbon flow coupling analysis model is established by steps including:
Determining, according to the coupling relationships between the carbon flow and the material and energy flows, as well as the unit processes, the conversion relationships between the carbon flow and the material and energy flows in the production process; and
Establishing the material flow-energy flow-carbon flow coupling analysis model based on the coupling relationships between the carbon flow and the material and energy flows by supplementing the conversion relationships between the carbon flow and the material and energy flows on the basis of the material flow-energy flow coupling analysis model.

Further, the input and output of the material flow and the energy flow in the production process includes basic information and key physical quantities of the material flow and the energy flow in the production process.

The basic information includes types, flow trajectories, conversion rules, and constraint conditions of the material flow and the energy flow.

The key physical quantities includes consumption quantity, production quantity, recovery quantity, emission quantity, sinter return quantity, gas calorific value, steam temperature, steam pressure, carbon content and iron content.

Further, the coupling relationship between the material flow and the energy flow exists in solid fuels

The coupling relationships between the carbon flow and the material and energy flows exist in the solid fuels.

Further, the major process includes coking, sintering, pelletizing, ironmaking, steelmaking, hot rolling and cold rolling processes in an integrated blast furnace-basic oxygen furnace procedure.

The energy system includes coal gas, oxygen, steam, electric power and water systems.

The production equipment contained within the major process includes a coke oven, a coke dry quenching device, a sintering machine, a circular cooler, roasting equipment, cooling equipment, a blast furnace, a hot blast stove, a basic oxygen furnace, a ladle, a refining furnace, a concaster, a reheating furnace, a roughing mill set, a finishing mill set, an annealing furnace, and a cold-rolling mill set.

The production equipment contained within the energy system includes a coal gas producer, a combustion chamber, a waste heat boiler, a coal-fired boiler, a gas-fired boiler, a power generator set, an oxygen plant, a compressor, a blower, a pressurizer, and a water treatment device.

Further, said decoupling the material flow and the energy flow of a unit where the parameter resides by using the material flow-energy flow coupling analysis model and a metallurgical mechanism underlying a production process includes:
When a parameter changes, obtaining, according to the unit into which the parameter flows and by using the material flow-energy flow coupling analysis model and the metallurgical mechanism underlying the production process, a change rule of the material flow or energy flow converted from and flowing out of the unit into which the parameter flows; and
Determining for true or not the material flow or energy flow is an intermediate product, if true, then analyzing, by using the material flow-energy flow coupling analysis model and the metallurgical mechanism underlying the production process, change rules of other material flows or energy flows converted from and flowing out of the unit into which the parameter flows.

Further, said decoupling the carbon flow from the material flow and the energy flow of a unit where the parameter resides using the material flow-energy flow-carbon flow coupling analysis model and a metallurgical mechanism underlying a production process includes:
When the parameter changes, obtaining, according to the unit into which the parameter flows and by using the material flow-energy flow-carbon flow coupling analysis model and the metallurgical mechanism underlying the production process, a change rule of the carbon flow contained within the material flow or energy flow converted from and flowing out of the unit which the parameter flows; and
Determining for true or not the material flow or energy flow is an intermediate product, if true, then analyzing, by using the material flow-energy flow-carbon flow coupling analysis model and the metallurgical mechanism underlying the production process, change rules of the carbon flows contained within other material flows or energy flows converted from and flowing out of the unit into which the parameter flows.

In another aspect, the present disclosure further provide a carbon emission evaluation method for integrated iron and steel sites, including:
Collecting the input and output of the material flow and the energy flow in the production process of iron and steel sites, wherein the material flow comprises the an iron-containing material flow and the a carbon-containing material flow, and the energy flow comprises an fuel and an energy carrier;
When a parameter changes, determining, based on the collected input and output of the material flow and the energy flow in the production process of the iron and steel sites, effects of the parameter change on the material flow, the energy flow and the carbon flow contained within the material flow or the energy flow by using the carbon emission evaluation model for integrated iron and steel sites according to any one of claims 1 to 7, wherein the parameter comprises a single or a plurality of material flows, energy flows, and key physical quantities of the flows;
Quantifying, based on the effects of the parameter change on the material flow, the energy flow and the carbon flow contained within the material flow or the energy flow, an initial carbon emission and an expected carbon emission in the production process before and after the parameter change; and
Obtaining, based on the initial carbon emission and the expected carbon emission in the production process before and after the parameter change, a carbon emission difference value in the production process caused by the parameter change.

When multiple parameters change, effects of a first parameter change on the material flow, the energy flow, and the carbon flow contained within the material flow or the energy flow is determined by using the material flow-energy flow-carbon flow coupling analysis model, and effects of a second parameter change on the material flow, the energy flow, and the carbon flow contained within the material flow or the energy flow is determined by using the material flow-energy flow-carbon flow coupling analysis model.

In a third aspect, the present disclosure also provide a carbon emission evaluation system for integrated iron and steel sites, including:
An input and output module configured to collect the input and output of the material flow and the energy flow in the production process of iron and steel sites, wherein the material flow comprises an iron-containing material flow and a carbon-containing material flow, and the energy flow comprises a fuel and an energy carrier;
A model establishing module configured to establish the carbon emission evaluation model for integrated iron and steel sites according to any one of claims 1 to 7;
An analysis module configured to determine, based on the input and output of the material flow and the energy flow in the production process of iron and steel sites collected by the input and output module when a parameter changes, the effects of the parameter change on the material flow, the energy flow, and the carbon flow contained within the material flow or the energy flow by using the carbon emission evaluation model for integrated iron and steel sites established by the model establishment module, wherein the parameter comprises a single or a plurality of material flows, energy flows, and the key physical quantities of the flows; and

An evaluation module configured to quantify, based on the effects of the parameter change on the material flow, the energy flow, and the carbon flow contained within the material flow or energy flow obtained by the analysis module, the initial carbon emission and the expected carbon emission in the production process before and after the parameter change, and to obtain, based on the initial carbon emission and the expected carbon emission in the production process before and after the parameter change, the carbon emission difference value in the production process caused by the parameter change.

Compared with existing methods, the present disclosure has the following features and beneficial effects:
In the present disclosure, for iron and steel sites characterized by an integrated blast furnace-basic oxygen furnace procedure, relies on the coupling relationships among material flow, energy flow and carbon flow and their connected process units during carbon emission evaluation, realizing carbon emission evaluation at the iron and steel site level. By incorporating the characteristics of the coupling relationship between the material flow and the energy flow as well as the inseparability of carbon flow with material flow and energy flow during iron and steel production processes, the present disclosure provides a material flow-energy flow-carbon flow analysis model, which fully enables the determination of other production processes affected when parameters in any process changes. Through the determination of chain reactions, the effect of parameter changes throughout the entire production process or between processes can be accurately evaluated, overcoming the defects of duplicate calculations or omissions, and realizing targeted, chain-reactive, and precise carbon emission evaluation.

### BRIEF DESCRIPTION OF THE DRAWINGS

In order to more clearly illustrate the technical solution in the embodiments of the present disclosure or the prior art, the following is a brief introduction of the accompanying drawings required to be used in the description of the embodiment or the prior art. Obviously, the accompanying drawings in the description below are some embodiments of the present disclosure. For those ordinary in the art, other accompanying drawings can also be obtained from these accompanying drawings without creative labor.
FIG. 1 is a schematic diagram of a composition of a carbon emission evaluation model for integrated iron and steel sites according to an embodiment of the present disclosure.
FIG. 2 is a flowchart of establishing a material flow-energy flow coupling analysis model according to an embodiment of the present disclosure.
FIG. 3 is a flowchart of establishing a material flow-energy flow-carbon flow coupling analysis model according to an embodiment of the present disclosure.
FIG. 4 is a flowchart of a carbon emission evaluation method for integrated iron and steel sites according to an embodiment of the present disclosure.
FIG. 5 is a structural block diagram of a carbon emission evaluation system for integrated iron and steel sites according to an embodiment of the present disclosure.

### DETAILED DESCRIPTION OF THE EMBODIMENTS

In view of the inseparable characteristic of carbon flow with material flow and energy flow during iron and steel production processes, the present disclosure provides a carbon emission evaluation model, evaluation method and evaluation system for integrated iron and steel sites.

To enable those skilled in the art to better understand the solutions of the present disclosure, the following clearly and completely describes the technical solutions in the embodiments of the present disclosure with reference to the accompanying drawings in the embodiments of the present disclosure. Apparently, the described embodiments are merely some rather than all of the embodiments. Based on embodiments of the present disclosure, all other embodiments obtained by those skilled in the art without creative labor shall fall within the protection scope of the present disclosure.

It should be noted that the terms "first", "second", etc. in the specification, claims, and accompanying drawings of the present disclosure are used to distinguish similar objects, and are not necessarily used to describe a specific order or sequence. It should be understood that the data used in this way may be interchanged under appropriate circumstances, so that the embodiments of the present disclosure described herein can be implemented in sequences other than those illustrated or described herein. In addition, the terms "comprise" and "have" and any variations thereof are intended to cover a non-exclusive inclusion. For example, a process, method, system, product, or equipment that includes a series of steps or units is not necessarily limited to those steps or units explicitly listed, but may include other steps or units that are not explicitly listed or are inherent to such processes, methods, products, or equipment.

### Embodiment 1

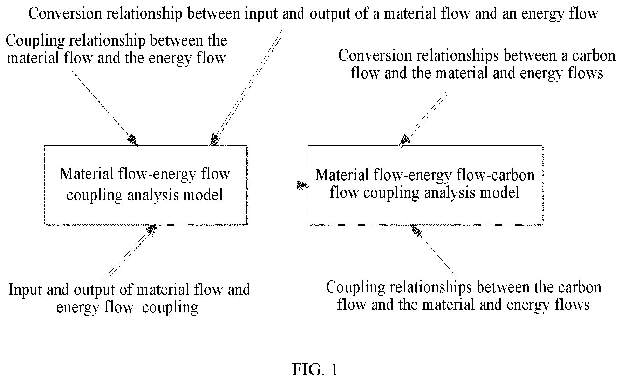

As shown in FIG. 1, the embodiment provides a carbon emission evaluation model for integrated iron and steel sites, where the integrated iron and steel sites can be iron and steel sites characterized by an integrated blast furnace-basic oxygen furnace procedure. The model includes:
A material flow-energy flow coupling analysis model composed of a coupling relationship between a material flow and an energy flow, an input and output of the coupling of material flow and energy flow, and a conversion relationship between the input and output of the coupling; and, a material flow-energy flow-carbon flow coupling analysis model formed, based on coupling relationships between a carbon flow and the material and energy flows, by supplementing conversion relationships between the carbon flow and the material and energy flows on the basis of the material flow-energy flow coupling analysis model.

When a parameter changes, the material flow and the energy flow of a unit where the parameter resides are decoupled by using the material flow-energy flow coupling analysis model and a metallurgical mechanism underlying a production process, thereby obtaining effects on other material flows and energy flows, and determining an influence scope on an output material flow or energy flow of the unit, an intermediate material flow or energy flow product, and input and output material flows or energy flows of a downstream unit, as well as trend changes of variables.

Further, decoupling is performed from the changed parameter to analyze a type of the changed parameter and a type of the physical quantity thereof. When a parameter changes, a variation pattern of the material flow or energy flow converted from and flowing out of the unit into which the parameter flows is obtained according to the unit into which the parameter flows as well as the material flow-energy flow coupling analysis model and the metallurgical mechanism underlying the production process. Determining for true or not the material flow or energy flow is an intermediate product, if true, then variation patterns of other material flows or energy flows converted from and flowing out of the unit into which the parameter flows are analyzed by using the material flow-energy flow coupling analysis model and the metallurgical mechanism underlying the production process,. When multiple parameters change, a parameter should to be analyzed on the basis of the analysis of the previous parameter analysis.

When a parameter changes, carbon flows from the material flow and the energy flow of a unit where the parameter resides are decoupled by using the material flow-energy flow-carbon flow coupling analysis model and a metallurgical mechanism underlying a production process, thereby obtaining effects on the carbon flows coupled with the material flow and the energy flow, and determining an influence scope on an output carbon flow of the unit, an intermediate material flow or energy flow product containing carbon flow, and input and output carbon flows of a downstream unit, as well as trend changes of variables.

Further, decoupling is performed from the changed parameter to analyze a type of the changed parameter and a type of the physical quantity thereof. When the parameter changes, a variation pattern of the carbon flow contained within the material flow or energy flow converted from and flowing out of the unit into which the parameter flows is obtained according to the unit into which the parameter flows and by using the material flow-energy flow-carbon flow coupling analysis model and the metallurgical mechanism underlying the production process. Determining for true or not the material flow or energy flow is an intermediate product, if true, then variation patterns of the carbon flows contained within other material flows or energy flows converted from and flowing out of the unit into which the parameter flows are analyzed by using the material flow-energy flow-carbon flow coupling analysis model and the metallurgical mechanism underlying the production process,.

The material flow comprises an iron-containing material flow and a carbon-containing material flow; the energy flow comprises a fuel and an energy carrier; the conversion relationship between the input and output of the coupling of material flow and energy flow refers to inputting a material flow, energy flow or coupled material flow and energy flow into a unit and outputting it form the unit after a conversion process, and then obtaining a converted material flow, energy flow or coupled material flow and energy flow; and the conversion relationships between the carbon flow and the material and energy flows are relationships between the material flow and its carbon content, the energy flow and its carbon content, and the coupled material flow and energy flow and its carbon content.

In terms of production-sustaining units, the coupling relationship between the material flow and the energy flow mainly exists in solid fuels such as cleaned coal, anthracite, coke and coke powder. The coupling relationships between the carbon flow and the material and energy flows refer to the carbon flow moving and converting along with the material flow and the energy flow. The coupling relationship between the carbon flow and the material flow exists in: intermediate products and final steel products such as coke, coke powder, sinter, pellets, melted iron, crude steel, continuous casting billets, steel billets, rough-rolled coils and finish-rolled coils; solid raw materials such as lump ore, iron concentrate, concentrate powder, limestone and magnesite; solid fuels such as cleaned coal, anthracite, coke and coke powder; and, solid products such as blast furnace slag, gas ash, cast iron and dust removal ash. The coupling relationship between the carbon flow and the energy flow exists in fuels such as blast furnace gas, coke oven gas, basic oxygen furnace gas, cleaned coal, anthracite, coke and coke powder. The coupling relationships between the carbon flow and the material and energy flows exist in solid fuels such as cleaned coal, anthracite, coke and coke powder.

Unit processes include a major process, an energy system, and production equipment contained within the major process and the energy system. The major process includes at least one of coking, sintering, pelletizing, ironmaking, steelmaking, hot rolling and cold rolling. The energy system includes at least one of coal gas, oxygen, steam, electric power and water systems. The production equipment contained within the major process includes at least one of a coke oven, a coke dry quenching device, a sintering machine, a circular cooler, roasting equipment, cooling equipment, a blast furnace, a hot blast stove, a basic oxygen furnace, a ladle, a refining furnace, a concaster, a reheating furnace, a roughing mill set, a finishing mill set, an annealing furnace and a cold-rolling mill set. The production equipment contained with the energy system includes at least one of a coal gas producer, a combustion chamber, a waste heat boiler, a coal-fired boiler, a gas-fired boiler, a power generator set, an oxygen plant, a compressor, a blower, a pressurizer, and a water treatment device.

Certainly, the aforementioned unit processes are only for this embodiment. In other embodiments, additional equipment (such as a lime kiln, a slag micro-powder device, etc.) and energy (such as natural gas, hydrogen, diesel) may be present. In practical applications, the selection of equipment and energy types should be determined according to actual requirements, with no limitations imposed herein.

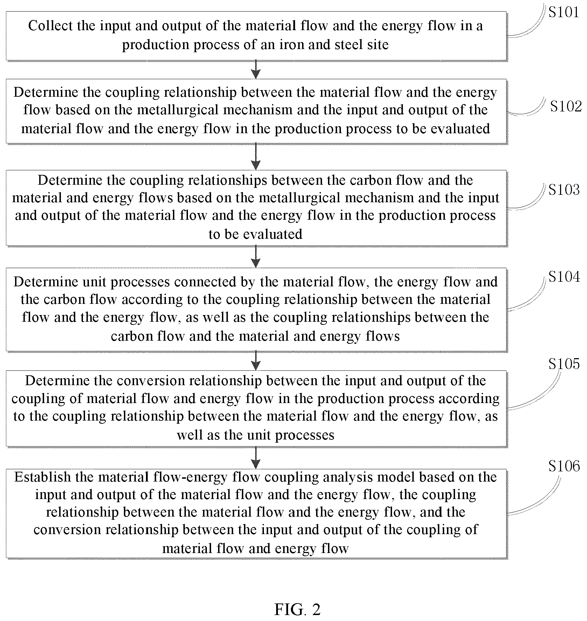

In specific implementations, a method for establishing the aforementioned model includes:
As shown in FIG. 2, a method for establishing the material flow-energy flow coupling analysis model includes the following steps:
S101. The input and output of the material flow and the energy flow in a production process of an iron and steel site is collected;
S102. The coupling relationship between the material flow and the energy flow is determined based on the metallurgical mechanism and the input and output of the material flow and the energy flow in the production process to be evaluated;
S103. The coupling relationships between the carbon flow and the material and energy flows are determined based on the metallurgical mechanism and the input and output of the material flow and the energy flow in the production process to be evaluated;
S104. Unit processes connected by the material flow, the energy flow and the carbon flow are determined according to the coupling relationship between the material flow and the energy flow and the coupling relationships between the carbon flow and the material and energy flows;
The unit processes include a main process, an energy system, and production equipment contained within the major process and the energy system;
S105. The conversion relationship between the input and output of the coupling of material flow and energy flow in the production process is determined according to the coupling relationship between the material flow and the energy flow, as well as the unit processes;
S106. the material flow-energy flow coupling analysis model is established based on the input and output of the material flow and the energy flow, the coupling relationship between the material flow and the energy flow, and the conversion relationship between the input and output of the coupling of material flow and energy flow.

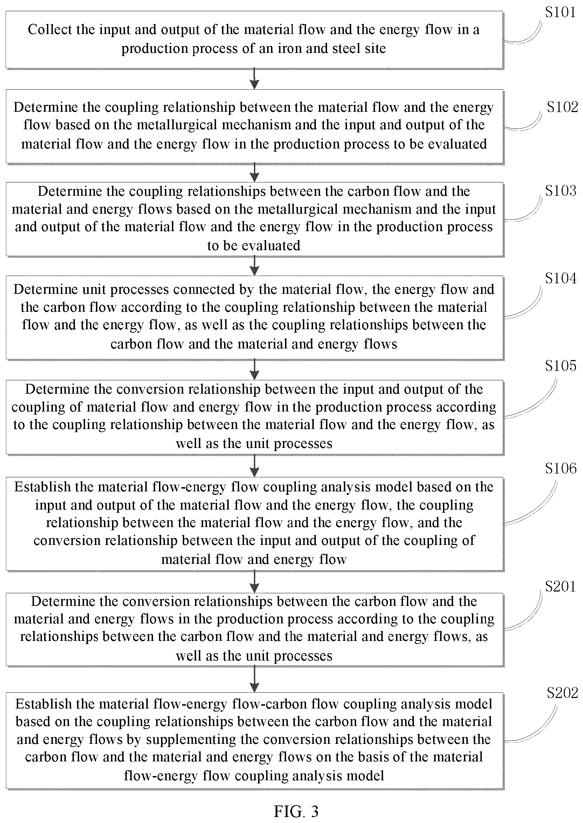

As shown in FIG. 3, a method for establishing the material flow-energy flow-carbon flow coupling analysis model further includes, based on the established material flow-energy flow coupling analysis model, the following steps:
S201. The conversion relationships between the carbon flow and the material and energy flows in the production process are determined according to the coupling relationships between the carbon flow and the material and energy flows, as well as the unit processes;
S202. The material flow-energy flow-carbon flow coupling analysis model is established based on the coupling relationships between the carbon flow and the material and energy flows by supplementing the conversion relationships between the carbon flow and the material and the energy flows on the basis of the material flow-energy flow coupling analysis model.

By utilizing the carbon emission evaluation model for integrated iron and steel sites in this embodiment, the material flow, energy flow and carbon flow in the production process of integrated iron and steel sites can be analyzed. When a parameter changes in the production process, its effect on other material flows or energy flows, as well as its effect on the carbon flows coupled with the material flow and the energy flow are determined, avoiding omissions or duplicate calculations during computation, thereby achieving precise evaluation of carbon emissions in production processes with chain reactions when implementing measures in iron and steel sites.

### Embodiment 2

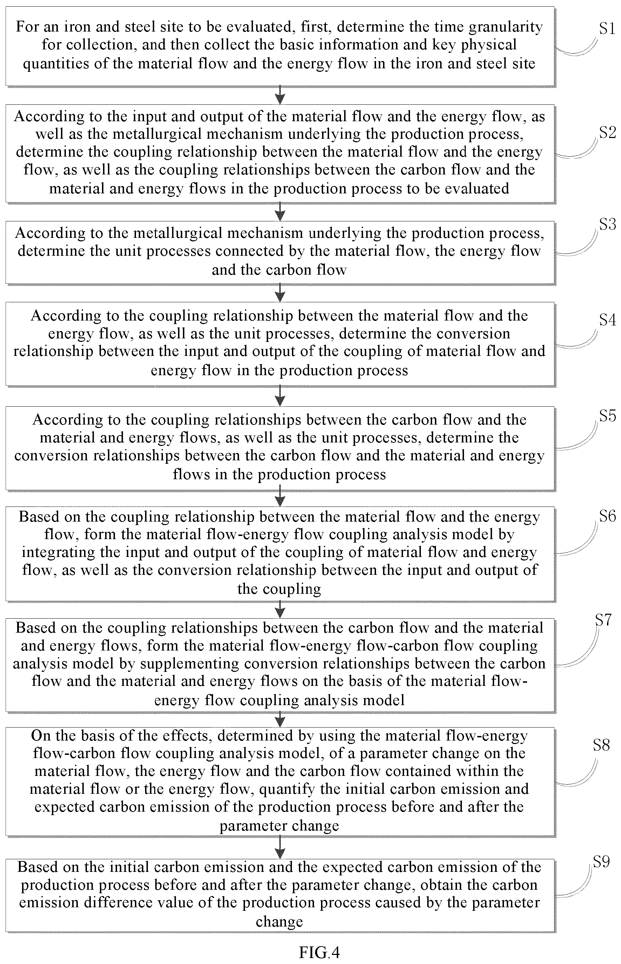

As shown in FIG. 4, this embodiment provides a carbon emission evaluation method for integrated iron and steel sites by implementing the carbon emission evaluation model for integrated iron and steel sites in Embodiment 1. The method includes:
S1. For the iron and steel site to be evaluated, first, the time granularity for collection is determined, and then the basic information and key physical quantities of the material flow and the energy flow in the iron and steel site are collected.

The time granularity for collection includes at least one of the following units: year, month, day, team, hour, heat sequence, and real-time.

The material flow includes an iron-containing material flow and a carbon-containing material flow. The energy flow includes a fuel (coal/coke, coal gas) and an energy carrier (steam, electricity, oxygen/nitrogen/argon, waste heat, process heat), etc.

The basic information of the material flow and energy flow for collection includes: types, flow trajectories, conversion patterns and constraint conditions of the material flow and the energy flow.

The key physical quantities of the material flow and energy flow for collection include: consumption quantity, production quantity, recovery quantity, emission quantity, sinter return quantity, gas calorific value, steam temperature, steam pressure, carbon content and iron content.

S2. According to the input and output of the material flow and the energy flow, as well as the metallurgical mechanism underlying the production process, the coupling relationship between the material flow and the energy flow, as well as the coupling relationships between the carbon flow and the material and energy flows in the production process to be evaluated are determined.

In terms of production-sustaining units, the coupling relationship between the material flow and the energy flow mainly exists in solid fuels such as cleaned coal, anthracite, coke and coke powder.

The coupling relationships between the carbon flow and the material and energy flows refer to the carbon flow moving and converting along with the material flow and the energy flow.

The coupling relationship between the carbon flow and the material flow exists in: intermediate products and final steel products such as coke, coke powder, sinter, pellets, melted iron, crude steel, continuous casting billets, steel billets, rough-rolled coils and finish-rolled coils; solid raw materials such as lump ore, iron concentrate, concentrate powder, limestone and magnesite; solid fuels such as cleaned coal, anthracite, coke and coke powder; and, solid products such as blast furnace slag, gas ash, cast iron and dust removal ash.

The coupling relationship between the carbon flow and the energy flow exists in fuels such as blast furnace gas, coke oven gas, basic oxygen furnace gas, cleaned coal, anthracite, coke and coke powder.

The coupling relationships between the carbon flow and the material and energy flows exist in solid fuels such as cleaned coal, anthracite, coke and coke powder.

S3. According to the metallurgical mechanism underlying the production process, the unit processes connected by the material flow, the energy flow and the carbon flow are determined.

Since carbon emissions are closely related to the entire iron and steel production process, the accurate calculation of carbon emission is inseparable from the calculation boundaries and basic data. Therefore, it is necessary to identify the unit processes connected by the material flow, the energy flow and the carbon flow. The unit processes include a major process, an energy system and production equipment contained within the major process and the energy system.

The major process includes at least one of coking, sintering, pelletizing, ironmaking, steelmaking, hot rolling and cold rolling process.

The energy system includes at least one of coal gas, oxygen, steam, electric power and water systems.

The production equipment contained within the major process includes at least one of a coke oven, a dry quenching device, a sintering machine, a circular cooler, roasting equipment, cooling equipment, a blast furnace, a hot blast stove, a basic oxygen furnace, a ladle, a refining furnace, a concaster, a reheating furnace, a roughing mill set, a finishing mill set, an annealing furnace and a cold-rolling mill set.

The production equipment contained within the energy system includes at least one of a coal gas producer, a combustion chamber, a waste heat boiler, a coal-fired boiler, a gas-fired boiler, a power generator set, an oxygen plant, a compressor, a blower, a pressurizer and a water treatment device.

S4. According to the coupling relationship between the material flow and the energy flow, as well as the unit processes, the conversion relationship between the input and output of the coupling of material flow and energy flow in the production process is determined.

The conversion relationship between the input and output of the coupling of material flow and energy flow refers to inputting a material flow, energy flow or coupled material flow and energy flow into a unit and outputting it from the unit after a conversion process, and then obtaining a converted material flow, energy flow or coupled material flow and energy flow, thereby obtaining the conversion relationship between the input and output of the coupling of material flow and energy flow in the process.

S5. According to the coupling relationships between the carbon flow and the material and energy flows, as well as the unit processes, the conversion relationships between the carbon flow and the material and energy flows in the production process are determined.

The conversion relationships between the carbon flow and the material and energy flows are the relationships between the material flow and its carbon content, the energy flow and its carbon content, and the coupled material flow and energy flow and its carbon content.

S6. Based on the coupling relationship between the material flow and the energy flow, the material flow-energy flow coupling analysis model is formed by integrating the input and output of the coupling of material flow and energy flow, as well as the conversion relationship between the input and output of the coupling.

When a parameter (a single or a plurality of material flows, energy flows and key physical quantities of the flows) changes, the material flow and the energy flow of a unit where the parameter resides are decoupled by using the material flow-energy flow coupling analysis model and the metallurgical mechanism, thereby obtaining effects on other material flows and energy flows, and determining an influence scope on an output material flow or energy flow of the unit, an intermediate material flow or energy flow product, and input and output material flows or energy flows of a downstream unit, as well as trend changes of variables.

Further, decoupling is performed from the changed parameter to analyze a type of the changed parameter and a type of the physical quantity thereof. When a parameter changes, a variation pattern of the material flow or energy flow converted from and flowing out of the unit into which the parameter flows is obtained according to the unit into which the parameter flows and by using the material flow-energy flow coupling analysis model and the metallurgical mechanism underlying the production process. Determining for true or not the material flow or energy flow is an intermediate product, if true, then variation patterns of other material flows or energy flows converted from and flowing out of the unit into which the parameter flows are analyzed by using the material flow-energy flow coupling analysis model and the metallurgical mechanism underlying the production process. When multiple parameters change, a parameter should to be analyzed on the basis of the analysis of the previous parameter analysis.

S7. Based on the coupling relationships between the carbon flow and the material and energy flows, the material flow-energy flow-carbon flow coupling analysis model is formed by supplementing conversion relationships between the carbon flow and the material and energy flows on the basis of the material flow-energy flow coupling analysis model.

When a parameter (a single or a plurality of material flows, energy flows and key physical quantities of the flows) changes, carbon flows from the material flow and the energy flow of a unit where the parameter resides are decoupled by using the material flow-energy flow-carbon flow coupling analysis model and the metallurgical mechanism, thereby obtaining effects on the carbon flows coupled with the material flow and the energy flow, and determining an influence scope on an output carbon flow of the unit, an intermediate material flow or energy flow product containing carbon flow, and input and output carbon flows of a downstream unit, as well as trend changes of variables.

Further, decoupling is performed from the changed parameter to analyze a type of the changed parameter and a type of the physical quantity thereof. When the parameter changes, a variation pattern of the carbon flow contained within the material flow or energy flow converted from and flowing out of the unit into which the parameter flows is obtained according to the unit into which the parameter flows and by using the material flow-energy flow-carbon flow coupling analysis model and the metallurgical mechanism underlying the production process. Determining for true or not the material flow or energy flow is an intermediate product, if true, then variation patterns of the carbon flows contained within other material flows or energy flows converted from and flowing out of the unit into which the parameter flows are analyzed by using the material flow-energy flow-carbon flow coupling analysis model and the metallurgical mechanism underlying the production process. When multiple parameters change, a parameter should to be analyzed on the basis of the analysis of the previous parameter analysis.

Steps S2 to S7 are the process of establishing and using the material flow-energy flow-carbon flow coupling analysis model for analysis.

S8. On the basis of the effects, determined by using the material flow-energy flow-carbon flow coupling analysis model, of a parameter change on the material flow, the energy flow and the carbon flow contained within the material flow or the energy flow, the initial carbon emission and expected carbon emission of the production process before and after the parameter change are quantified.

The initial carbon emission includes carbon emissions of the unit where a single or a plurality of parameters reside before changing, and total carbon emissions of the entire process.

The expected carbon emission includes carbon emissions of the unit where a single or a plurality of parameters reside after changing, the carbon emissions of other affected units, and total carbon emissions of the entire process.

S9. Based on the initial carbon emission and the expected carbon emission of the production process before and after the parameter change, the carbon emission difference value of the production process caused by the parameter change is obtained.

Taking the change in scrap steel ratio as an example, based on the coupling of the material flow and the carbon flow, the effect of changes in scrap ratio is decoupled using the material flow-energy flow-carbon flow coupling analysis model. Firstly, for the unit affected by the scrap ratio and its downstream units, in the case of constant steel production, the basic oxygen furnace, refining and continuous casting units during the steelmaking process remain unchanged. In addition, the production capacity of the reheating furnace remains unchanged due to the constant steel production, so the carbon emissions of the units after the steelmaking process will also remain unchanged. Secondly, an increase of scrap ratio will reduce the amount of melted iron required by the basic oxygen furnace. Therefore, the input and output material flow and energy flow as well as their coupled carbon flow in the upstream blast furnace unit will also change accordingly, resulting in reduced carbon emission from the blast furnace as an equipment unit. Consequently, the demand for hot blast in the blast furnace decreases, resulting in a corresponding reduction in carbon emission from the flue gas emitted by the hot blast stove. Additionally, the material flow or energy flow input into the blast furnace are affected, such as sinter, pellets and coke, with their demand decreasing as the decrease of the amount of melted iron. As a result, the carbon flows in sintering (sintering machine), roasting (roasting machine) and coking (coke oven) processes will decrease, leading to reduced carbon emission. Following these changes, the amounts of surplus blast furnace gas and coke oven gas diminish, so that the carbon emission generated by gas-based power in the final power system will diminish. The abovementioned is a carbon emission reduction process caused by a change of the scrap ratio. Therefore, the sum of carbon emissions from all units after the changes constitutes the expected carbon emission, and the difference value between the expected carbon emission and the initial carbon emission represents the carbon emission difference in the production process caused by the change in scrap ratio.

The carbon emission difference value includes the carbon emission difference value of the unit where the parameter resides before and after the change, the carbon emission difference values of other affected units, and the total carbon emission difference value throughout the entire process.

Finally, an accurate quantification of the carbon emission in the production process to be evaluated is realized, constituting a more comprehensive carbon emission evaluation method for iron and steel sites based on the characteristic of an integrated blast furnace-basic oxygen furnace procedure.

In the above embodiment, for iron and steel sites characterized by an integrated blast furnace-basic oxygen furnace procedure, relies on the coupling relationships among material flow, energy flow and carbon flow and their connected process units during carbon emission evaluation, realizing carbon emission evaluation at the iron and steel sites level. By incorporating the characteristics of the coupling relationship between the material flow and the energy flow as well as the inseparability of carbon flow with material flow and energy flow during iron and steel production processes, the present disclosure provides a material flow-energy flow-carbon flow analysis model, which fully enables the determination of other production processes affected when parameters in any process changes. Through the determination of chain reactions, the effect of parameter changes throughout the entire production process or between processes can be accurately evaluated, overcoming the defects of duplicate calculations or omissions, and realizing targeted, chain-reactive, and precise carbon emission evaluation.

### Embodiment 3

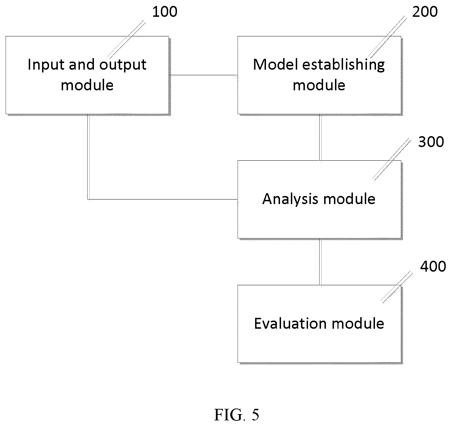

As shown in FIG. 5, corresponding to the carbon emission evaluation method for integrated iron and steel sites in Embodiment 2, this embodiment provides a carbon emission evaluation system for integrated iron and steel sites, including:
An input and output module 100 configured to collect the input and output of the material flow and the energy flow in a production process for an iron and steel site, where the material flow includes an iron-containing material flow and a carbon-containing material flow, and the energy flow includes a fuel and an energy carrier;
A model establishment module 200 configured to establish the carbon emission evaluation model for integrated iron and steel sites in Embodiment 1 based on the input and output of the material flow and the energy flow in a production process for an iron and steel site collected by the input and output module 100;
An analysis module 300 configured to determine, based on the input and output of the material flow and the energy flow in the production process collected by the input and output module 100 when a parameter changes, the effects of the parameter change on the material flow, the energy flow and the carbon flow contained within the material flow or the energy flow by using the carbon emission evaluation model for integrated iron and steel sites established by the model establishment module 200, where the parameter includes a single or a plurality of material flows, energy flows and the key physical quantities of the flows; and
An evaluation module 400 configured to quantify, based on the effects of the parameter change on the material flow, the energy flow and the carbon flow contained within the material flow or the energy flow obtained by the analysis module 300, the initial carbon emission and the expected carbon emission of the production process before and after the parameter change, and to obtain the carbon emission difference value in the production process caused by the parameter change based on the initial carbon emission and the expected carbon emission before and after the parameter change.

For the carbon emission evaluation system for integrated iron and steel sites in this embodiment of the present disclosure, since it corresponds to the carbon emission evaluation method for integrated iron and steel sites described in the previous embodiment, the description here is relatively concise. For relevant similarities, please refer to the description of the carbon emission evaluation method for integrated iron and steel sites in the previous embodiment, which will not be reiterated in detail here.

Finally, it should be noted that the above embodiments are only used to illustrate the technical solutions of the present disclosure and are not limited thereto. Although the present disclosure is described in detail with reference to the foregoing embodiments, those skilled in the art should understand that the technical solutions described in the foregoing embodiments may still be modified, or some or all of the technical features may be equivalently replaced; and these modifications or replacements do not make the essence of the corresponding technical solutions fall within the scope of the technical solutions of the embodiments of the present disclosure..

## Claims

1. A carbon emission evaluation model for integrated iron and steel sites, comprising:
a material flow-energy flow coupling analysis model composed of a coupling relationship between a material flow and an energy flow, an input and output of the coupling of the material flow and energy flow, and a conversion relationship between the input and output of the coupling; and,
a material flow-energy flow-carbon flow coupling analysis model formed, based on coupling relationships between a carbon flow and the material and energy flows, by supplementing conversion relationships between the carbon flow and the material and energy flows on the basis of the material flow-energy flow coupling analysis model;
wherein,
when a parameter changes, the material flow and the energy flow of a unit where the parameter resides are decoupled by using the material flow-energy flow coupling analysis model and a metallurgical mechanism underlying a production process, thereby obtaining effects on other material flows and energy flows, and determining an influence scope on an output material flow or energy flow of the unit, an intermediate material flow or energy flow product, and input and output material flows or energy flows of downstream units, as well as trend changes of variables;
when a parameter changes, carbon flows from the material flow and the energy flow of a unit where the parameter resides are decoupled by using the material flow-energy flow-carbon flow coupling analysis model and the metallurgical mechanism underlying the production process, thereby obtaining effects on the carbon flows coupled with the material flow and the energy flow, and determining an influence scope on an output carbon flow of the unit, an intermediate material flow or energy flow product containing carbon flow, and input and output carbon flows of a downstream unit, as well as trend changes of variables;
wherein,
the material flow comprises an iron-containing material flow and a carbon-containing material flow; the energy flow comprises a fuel and an energy carrier; the conversion relationship between the input and output of the coupling of material flow and energy flow refers to inputting a material flow, energy flow or coupled material flow and energy flow into a unit and outputting it from the unit after a conversion process, and then obtaining a converted material flow, energy flow or coupled material flow and energy flow; and the conversion relationships between the carbon flow and the material and energy flows are relationships between the material flow and its carbon content, the energy flow and its carbon content, and the coupled material flow and energy flow and its carbon content.

2. The carbon emission evaluation model for integrated iron and steel sites according to claim 1, wherein,
the material flow-energy flow coupling analysis model is established by steps comprising:
collecting the input and output of the material flow and the energy flow in a production process of iron and steel sites;
determining, based on the metallurgical mechanism and the input and output of the material flow and the energy flow in the production process, the coupling relationship between the material flow and the energy flow;
determining, based on the metallurgical mechanism and the input and output of the material flow and the energy flow in the production process, the coupling relationships between the carbon flow and the material and energy flows;
determining, according to the coupling relationship between the material flow and the energy flow, as well as the coupling relationships between the carbon flow and the material and energy flows, unit processes connected by the material flow, the energy flow and the carbon flow, wherein the unit processes comprise a major process, an energy system, and production equipment contained within the major process and the energy system;
determining, according to the coupling relationship between the material flow and the energy flow, as well as the unit processes, the conversion relationship between the input and output of the coupling of material flow and energy flow in the production process; and
establishing the material flow-energy flow coupling analysis model based on the input and output of the material flow and the energy flow, the coupling relationship between the material flow and the energy flow, and the conversion relationship between the input and output of the coupling of material flow and energy flow;
and
the material flow-energy flow-carbon flow coupling analysis model is established by steps comprising:
determining, according to the coupling relationships between the carbon flow and the material and energy flows, as well as the unit processes, the conversion relationships between the carbon flow and the material and energy flows in the production process; and
establishing the material flow-energy flow-carbon flow coupling analysis model based on the coupling relationships between the carbon flow and the material and energy flows by supplementing the conversion relationships between the carbon flow and the material and energy flows on the basis of the material flow-energy flow coupling analysis model.

3. The carbon emission evaluation model for integrated iron and steel sites according to claim 2, wherein the input and output of the material flow and the energy flow in the production process comprises: basic information and key physical quantities of the material flow and the energy flow in the production process;
wherein,
the basic information comprises: types, flow trajectories, conversion rules, and constraint conditions of the material flow and the energy flow; and
the key physical quantities comprise: consumption quantity, production quantity, recovery quantity, emission quantity, sinter return quantity, gas calorific value, steam temperature, steam pressure, carbon content, and iron content.

4. The carbon emission evaluation model for integrated iron and steel sites according to claim 2, wherein the coupling relationship between the material flow and the energy flow exists in solid fuels, and the coupling relationships between the carbon flow and the material and energy flows exist in solid fuels.

5. The carbon emission evaluation model for integrated iron and steel sites according to claim 2, wherein,
the major process comprises coking, sintering, pelletizing, ironmaking, steelmaking, hot rolling, and cold rolling processes in an integrated blast furnace-basic oxygen furnace procedure;
the energy system comprises coal gas, oxygen, steam, electric power, and water systems;
the production equipment contained within the major process comprises a coke oven, a coke dry quenching device, a sintering machine, a circular cooler, roasting equipment, cooling equipment, a blast furnace, a hot blast stove, a basic oxygen furnace, a ladle, a refining furnace, a concaster, a reheating furnace, a roughing mill set, a finishing mill set, an annealing furnace, and a cold-rolling mill set; and
the production equipment contained within the energy system comprises a coal gas producer, a combustion chamber, a waste heat boiler, a coal-fired boiler, a gas-fired boiler, a power generator set, an oxygen plant, a compressor, a blower, a pressurizer, and a water treatment device.

6. The carbon emission evaluation model for integrated iron and steel sites according to claim 1, wherein said decoupling the material flow and the energy flow of a unit where the parameter resides by using the material flow-energy flow coupling analysis model and a metallurgical mechanism underlying a production process comprises:
when a parameter changes, obtaining, according to the unit into which the parameter flows and by using the material flow-energy flow coupling analysis model and the metallurgical mechanism underlying the production process, a variation pattern of the material flow or energy flow converted from and flowing out of the unit into which the parameter flows; and
determining for true or not the material flow or energy flow is an intermediate product, if true, then analyzing, by using the material flow-energy flow coupling analysis model and the metallurgical mechanism underlying the production process, variation patterns of other material flows or energy flows converted from and flowing out of the unit into which the parameter flows.

7. The carbon emission evaluation model for integrated iron and steel sites according to claim 1, wherein said decoupling the carbon flows from the material flow and the energy flow of a unit where the parameter resides by using the material flow-energy flow-carbon flow coupling analysis model and a metallurgical mechanism underlying a production process comprises:
when the parameter changes, obtaining, according to the unit into which the parameter flows and by using the material flow-energy flow-carbon flow coupling analysis model and the metallurgical mechanism underlying the production process, a variation pattern of the carbon flow contained within the material flow or energy flow converted from and flowing out of the unit into which the parameter flows; and
determining for true or not the material flow or energy flow is an intermediate product, if true, then analyzing, by using the material flow-energy flow-carbon flow coupling analysis model and the metallurgical mechanism underlying the production process, variation patterns of the carbon flows contained within other material flows or energy flows converted from and flowing out of the unit into which the parameter flows.

8. A carbon emission evaluation method for integrated iron and steel sites, comprising:
collecting the input and output of the material flow and the energy flow in a production process of iron and steel sites, wherein the material flow comprises an iron-containing material flow and a carbon-containing material flow, and the energy flow comprises an fuel and an energy carrier;
when a parameter changes, determining, based on the collected input and output of the material flow and the energy flow in the production process of iron and steel sites, effects of the parameter change on the material flow, the energy flow and the carbon flow contained within the material flow or the energy flow by using the carbon emission evaluation model for integrated iron and steel sites according to any one of claims 1 to 7, wherein the parameter comprises a single or a plurality of material flows, energy flows, and key physical quantities of the flows;
quantifying, based on the effects of the parameter change on the material flow and the energy flow and the carbon flow contained within the material flow or the energy flow, an initial carbon emission and an expected carbon emission in the production process before and after the parameter change; and
obtaining, based on the initial carbon emission and the expected carbon emission in the production process before and after the parameter change, a carbon emission difference value in the production process caused by the parameter change.

9. The carbon emission evaluation method for integrated iron and steel sites according to claim 8, wherein when multiple parameters change, effects of a first parameter change on the material flow, the energy flow, and the carbon flow contained within the material flow or the energy flow is determined by using the material flow-energy flow-carbon flow coupling analysis model, and effects of a second parameter change on the material flow, the energy flow, and the carbon flow contained within the material flow or the energy flow is determined by using the material flow-energy flow-carbon flow coupling analysis model.

10. A carbon emission evaluation system for integrated iron and steel sites, comprising:
an input and output module configured to collect the input and output of the material flow and the energy flow in a production process of iron and steel sites, wherein the material flow comprises an iron-containing material flow and a carbon-containing material flow, and the energy flow comprises a fuel and an energy carrier;
a model establishing module configured to establish the carbon emission evaluation model for integrated iron and steel sites according to any one of claims 1 to 7;
an analysis module configured to determine, based on the input and output of the material flow and the energy flow in the production process of iron and steel sites collected by the input and output module when a parameter changes, the effects of the parameter change on the material flow, the energy flow, and the carbon flow contained within the material flow or the energy flow by using the carbon emission evaluation model for integrated iron and steel sites established by the model establishment module, wherein the parameter comprises a single or a plurality of material flows, energy flows, and the key physical quantities of the flows; and
an evaluation module configured to quantify, based on the effects of the parameter change on the material flow and the energy flow and the carbon flow contained within the material flow or energy flow obtained by the analysis module, the initial carbon emission and the expected carbon emission in the production process before and after the parameter change, and to obtain, based on the initial carbon emission and the expected carbon emission in the production process before and after the parameter change, the carbon emission difference value in the production process caused by the parameter change.
